# EUROPÄISCHE PATENTANMELDUNG

(11) **EP 3 656 213 A1**
(43) Veröffentlichungstag der Anmeldung: **27.05.2020**
(21) Anmeldenummer: 18207336.1
(22) Anmeldetag: 20.11.2018
(51) Int. Cl.: A01K 11/00, A01K 27/00, A01K 29/00, A44B 11/06

(54) **ELEKTRONISCHE VORRICHTUNG FÜR DIE ERFASSUNG UND/ODER ÜBERTRAGUNG VON SENSORDATEN EINES TIERES**

(71) Anmelder: InnoCow GmbH, 67663 Kaiserslautern (DE)
(72) Erfinder: Weins, Matthias, 67663 Kaiserslautern (DE)
(74) Vertreter: dompatent von Kreisler Selting Werner - Partnerschaft von Patent- und Rechtsanwälten mbB

(57) **Zusammenfassung**

Die elektronische Vorrichtung für die Erfassung und/oder Übertragung von Sensordaten eines Tieres und zur Anbringung an einem von dem Tier zu tragenden Halsband ist versehen mit einem Gehäuse (14, 14', 14"), das ein erstes Gehäuseteil (18) und ein zweites Gehäuseteil (20) aufweist, die klappbar miteinander verbindbar sind. Mindestens eines der Gehäuseteile (18, 20) nimmt elektronische Bauteile (46) und/oder eine Energieversorgungseinheit (44) für die elektronischen Bauteile (46) auf. Beide Gehäuseteile (18, 20) weisen jeweils eine innenliegende Halsband-Anlageseite (24, 26) auf, die im zusammengeklappten Zustand des Gehäuses (14, 14', 14") zur beidseitigen Anlage an einem Halsband einander zugewandt sind. Eine Anlageseite (24,26) weist mindestens einen Verrutschsicherungsvorsprung (36, 38) zum mechanischen Eingriff mit dem Halsband auf.

## Beschreibung

Die Erfindung betrifft eine elektronische Vorrichtung für die Erfassung und/oder Übertragung von Sensordaten eines Tieres, insbesondere eines Herdentieres, und zur Anbringung an einem von dem Tier zu tragenden Halsband. Insbesondere betrifft die Erfindung eine elektronische Vorrichtung, wie sie von Herdentieren, beispielsweise Kühen, zur Erfassung von Daten für das Herdenmanagement getragen werden.

Es ist bekannt, die Tiere einer Herde, beispielsweise Kühe mit Transpondern auszustatten, die an einem vom Tier zu tragenden Halsband angeordnet sind. Derartige Transponder wirken mit Sensoreinheiten im Stall und/oder auf der Weide bzw. an Melkrobotern zusammen, wodurch sich z. B. das Aufenthalts- und Bewegungsprofil sowie das Fressverhalten der Kühe erfassen lässt. Die Transponder können auch weitere Sensorik aufweisen, um den physiologischen Zustand der Tiere zu erfassen (siehe z. B. US-B-7,350, 481 und US-B-7,878,149).

Die an einem Halsband zu tragenden Transpondergehäuse sollten verrutschsicher sein, um beispielsweise physiologische Daten des Tieres zuverlässig aufnehmen zu können bzw. in der vorschriftsmäßigen Höhe angeordnet zu sein, wenn sich das Tier an einer den Transponder auslesenden Auslesereinheit vorbeibewegt oder aufhält. Bekannte Lösungen sehen bisher vor, dass das Halsband unter im wesentlichen Z-förmiger Umlenkung außen am Gehäuse vorbeigeführt wird, wozu das Halsband durch Durchführungen am Gehäuse hindurchgefädelt werden muss (siehe z. B. WO-A-2018/061003 und EP-A-0 135 220). Dieser Vorgang ist zeitaufwändig und unkomfortabel. Dies gilt insbesondere dann, wenn der Transponder aufgrund eines Defekts ausgetauscht werden muss. Dazu wird dann im Regelfall das gesamte Halsband ausgetauscht. Das Abnehmen und das Anlegen eines Halsbandes könnte das Tier irritieren und für das Tier unangenehm sein.

Aufgabe der Erfindung ist es, eine elektronische Vorrichtung für die Erfassung und/oder Übertragung von Sensordaten eines Tieres anzugeben, die bequem und einfach an einem von dem Tier zu tragenden Halsband anbringbar und von diesem abnehmbar ist.

Zur Lösung dieser Aufgabe wird mit der Erfindung eine elektronische Vorrichtung für die Erfassung und/oder Übertragung von Sensordaten eines Tieres und zur Anbringung an einem von dem Tier zu tragenden Halsband vorgeschlagen, wobei die elektronische Vorrichtung versehen ist mit
- einem Gehäuse, das ein erstes Gehäuseteil und ein zweites Gehäuseteil aufweist, die miteinander verbindbar oder verbunden sind,
- wobei mindestens eines der Gehäuseteile elektronische Bauteile und/oder eine Energieversorgungseinheit für die elektronischen Bauteile aufnimmt,
- wobei beide Gehäuseteile jeweils eine innenliegende Halsband-Anlageseite aufweisen, die im zusammengesetzten Zustand beider Gehäuseteile des Gehäuses zur beidseitigen Anlage an einem Halsband einander zugewandt sind, und
- wobei mindestens eine Anlageseite mindestens einen Verrutschsicherungsvorsprung zum mechanischen Eingriff mit dem Halsband aufweist.

Mit der Erfindung wird also ein Gehäuse der elektronischen Vorrichtung vorgeschlagen, das insbesondere zwecks Auf- und Zuklappens miteinander verbindbar oder verbunden sind. Ein derartiges Gehäuse lässt sich einfach an einem Halsband anbringen bzw. von diesem abnehmen. Diese Vorgänge erfordern nur wenige Handgriffe, wobei der Vorteil insbesondere darin besteht, dass ein Vorrichtungswechsel, der beispielsweise aufgrund eines Defekts erforderlich ist, erfolgen kann, während das Tier das Halsband trägt. Ein Halsbandwechsel oder die Abnahme und das anschließende Wiederanlegen des Halsbandes sind also nicht erforderlich.

Die erfindungsgemäße elektronische Vorrichtung weist ein Gehäuse auf, das ein erstes Gehäuseteil und ein zweites Gehäuseteil umfasst, die vorzugsweise werkzeuglos und ohne mittels eines Werkzeugs handzuhabende Befestigungs- bzw. Verbindungselemente miteinander verbindbar sind. Die Elektronik und/oder die Energieversorgung können in einem gemeinsamen Gehäuseteil oder aber auf beide Gehäuseteile verteilt angeordnet sein. Teile der Elektronik können sein Komponenten für
- Ultrabreitbandfunk (UWB) für die Indoor-Ortung und Datenübertragung im Stall
- Langstreckenfunk (LoRaWAN) für die Kommunikation bei der Weidehaltung
- GPS für die Outdoor-Ortung
- Kurzstreckenfunk für Firmwareupdates
- NFC für die Geräteidentifikation und Provisionierung
- Beschleunigungssensor für die Aktivitätserfassung
- (Mikrofon für Kaugeräusche)
- (Barometer für die Höhe)

Beide Gehäuseteile weisen jeweils eine innenliegende Halsband-Anlageseite auf. Die beiden Halsband-Anlageseiten sind dann im zusammengesetzten Zustand des Gehäuses einander zugewandt, wobei sich das Halsband zwischen diesen beiden Anlageseiten erstreckt, wenn die elektronische Vorrichtung am Halsband angebracht ist. Die Verrutschsicherung wird bei der erfindungsgemäßen Vorrichtung dadurch realisiert, dass mindestens eine Anlageseite bzw. die Anlageseite mindestens eines Gehäuseteils zumindest einen Verrutschsicherungsvorsprung aufweist, der mechanisch in Eingriff mit dem Halsband bringbar ist. Dies kann beispielsweise durch eine Druckanlage oder aber auch durch Eindringen des Verrutschsicherungsvorsprungs in das Halsband bewerkstelligt werden.

Im zusammengesetzten Zustand sind die beiden Gehäuseteile gegen ein unbeabsichtigtes Lösen gesichert, was beispielsweise durch eine Verschraubung, Verklipsung odgl. lösbare Verbindung erfolgen kann. Diese Verbindung der beiden Gehäuseteile im zusammengesetzten Zustand kann darüber hinaus auch dazu genutzt werden, die beiden Gehäuseteile miteinander zu verspannen, so dass ihre Anlageseiten mit Druck am Halsband anliegen.

In einer zweckmäßigen Ausgestaltung der Erfindung ist beispielsweise vorgesehen, dass eines der Gehäuseteile die Elektronik und die Energieversorgung enthält, während das andere Gehäuseteil diesbezüglich funktionslos ist und dem Zweck dient, das Gehäuse im zusammengesetztem Zustand beidseitig am Halsband anliegend zu gestalten.

In weiterer zweckmäßiger Ausgestaltung der Erfindung kann vorgesehen sein, dass jede Halsband-Anlageseite eine streifenförmige Anlagefläche aufweist, an der die Halsband-Anlageseite an dem Halsband anliegt. Das Halsband ist zweckmäßigerweise als Flachband ausgebildet, weshalb die Halsband-Anlageseiten der beiden Gehäuseteile Anlageflächen aufweisen, die streifenförmig sind. Alternativ ist es aber ebenso möglich, ein im Querschnitt rundes, insbesondere kreisrundes Halsband zu verwenden, was bedeutet, dass dann die Halsband-Anlageseiten der beiden Gehäuseteile eine konkave Gestalt aufweisen, wobei es hier in einer weiteren Alternative auch möglich ist, dass nur eine der beiden Halsband-Anlageseiten eine rinnenförmige bzw. konkave Anlagefläche aufweist, während die Anlagefläche der Halsband-Anlageseite des anderen Gehäuseteils flach bzw. eben ausgebildet ist. Die ebene Halsband-Anlagefläche wird dann dazu genutzt, das Halsband in die rinnenförmige Anlagefläche am anderen Gehäuseteil zu drücken bzw. zu pressen, wenn das Gehäuse zusammengesetzt und die Gehäuseteile aneinander gesichert sind.

In weiterer zweckmäßiger Ausgestaltung der Erfindung ist, die streifenförmige Anlagefläche mindestens einer der Halsband-Anlageseiten vertieft gegenüber der betreffenden Halsband-Anlageseite angeordnet. Bei einem Flachband als Halsband ist der Grund, also die "Bodenfläche" der Vertiefung in der einen Halsband-Anlageseite bzw. in beiden Halsband-Anlageseiten eben ausgebildet. Bei Verwendung eines im Querschnitt runden Halsbandes ergibt sich die Situation, wie weiter oben beschrieben.

Wie bereits oben erwähnt, existieren verschiedene Realisierungsmöglichkeiten für den mindestens einen erfindungsgemäß vorgesehenen Verrutschsicherungsvorsprung. In einer vorteilhaften Ausgestaltung ist der mindestens eine Verrutschsicherungsvorsprung als quer zur Längserstreckung der streifenförmigen Anlagefläche verlaufende Rippe ausgebildet. Eine derartige querverlaufende Rippe drückt sich dann von der einen Seite an und/oder in das Halsband hinein, womit das Gehäuse verrutschsicher am Halsband fixiert ist.

Zur weiteren Erhöhung der Verrutschsicherheit kann vorgesehen sein, dass beide Anlageflächen in Längserstreckung der Anlageflächen versetzt angeordnete Rippen zur Umlenkung des Verlaufs des Halsbandes zwischen den beiden Halsband-Anlageseiten aufweist. Durch die damit zu realisierende ein- bzw. mehrfache Umlenkung des Halsbandes im Bereich zwischen den Halsband-Anlageseiten entsteht eine zusätzliche Verankerung und Arretierung des Gehäuses am Halsband. Bei einer Ausgestaltung dieser Weiterbildung befinden sich beispielsweise an der einen Halsband-Anlageseite zwei voneinander beabstandete querverlaufende Rippen, während die andere Anlageseite beispielsweise eine Rippe aufweist, die dem Abstandsbereich der beiden zuvor genannten Rippen gegenüberliegt. Damit ist eine doppelte Umlenkung des Halsbandes gegeben.

Es ist aber auch denkbar, dass auf beiden Anlageflächen einander jeweils gegenüberliegende Rippen vorgesehen sind.

In weiterer vorteilhafter Ausgestaltung der Erfindung kann vorgesehen sein, dass der mindestens eine Verrutschsicherungsvorsprung eine gezahnte Oberflächenstruktur aufweist. Die gezahnte Oberflächenstruktur kann sich bei Ausbildung des Verrutschsicherungsvorsprungs als Rippe über die gesamte Oberseite der Rippe oder auch nur über einen Teil davon erstrecken. Schließlich ist es auch möglich, dass der mindestens eine Verrutschsicherungsvorsprung als Dorn zum zumindest teilweisen Eindringen in das Halsband ausgebildet ist. Durch die gezahnte Oberflächenstruktur und/oder als Dorne ausgebildetete Verrutschsicherungsvorsprünge ergibt sich nun die Möglichkeit, dass sich die Vorsprünge zur Verrutschsicherung in das Material des zumeist gewebten Halsbandes "einarbeiten", wenn das Gehäuse geschlossen wird.

Um im Bedarfsfall eines der beiden Gehäuseteile gegen ein entsprechendes neues Gehäuseteil austauschen zu können, ist gemäß einer weiteren Ausgestaltung der Erfindung vorgesehen, dass die beiden Gehäuseteile voneinander trennbar sind. In diesem Zustand lassen sich also die beiden Gehäuseteile voneinander trennen. Die beiden Gehäuseteile sind z. B. scharnierartig miteinander verbunden. Zum Trennen der beiden Gehäuseteile könnte beispielsweise die Scharnierachse gelöst und aus den Scharnierteilen herausgezogen werden, um eines der Gehäuseteile gegen ein neues entsprechendes Gehäuseteil auszutauschen. Ebenso ist es aber mit Vorteil denkbar, dass eine an einem der beiden Gehäuseteile verlaufende und angeordnete Gelenkachse Abflachungen aufweist, die derart positioniert sind, dass sich ein Gegenscharnierteil mit im Wesentlichen C-förmigem Profil auf die Abflachungsbereiche der Gelenkachse aufstecken lässt. Nach dem Verschwenken der beiden Gehäuseteile wirken dann die abgeflachte Gelenkachse und das C-förmige Profil wie ein Drehgelenk miteinander zusammen.

Wie bereits oben beschrieben, beinhaltet das Gehäuse der erfindungsgemäßen Vorrichtung Sensorik und Energieversorgung. Diese elektrischen Komponenten können in ein- und demselben Gehäuseteil untergebracht sein. Aus Platzgründen wird man aber eher die elektronischen Bauteile für diese beiden elektrischen Komponenten auf beide Gehäuseteile verteilen. So ist es beispielsweise sinnvoll, den Transponder und beispielsweise einen Bewegungssensor in demjenigen Gehäuseteil unterzubringen, der im vom Tier getragenen Zustand des Halsbandes außenliegend, also dem Hals des Tieres abgewandt ist. Für die Energieversorgung sind Akkumulatoren odgl. insbesondere wieder aufladbare Batterien erforderlich. Diese nehmen einen gewissen Raum ein, da die Energieversorgung über einen längeren Zeitraum sichergestellt sein sollte. Daher ist es zweckmäßig, die Akkumulatoren bzw. Batterien in dem anderen Gehäuseteil unterzubringen, das dann bei getragenem Halsband dem Hals des Tieres zugewandt ist. In diesem Gehäuseteil können dann diejenigen Sensoren noch untergebracht sein, die zur Datenerfassung einen Kontakt zum Tier erfordern (wie beispielsweise Herzschlagfrequenz, Blutdruck- und/oder Temperatur-Sensoren).

Bei Aufteilung der elektronischen Bauteile und Energieversorgung auf beide Gehäuseteile bedarf es einer elektrischen Verbindung zwischen den beiden Gehäuseteilen. Diese elektrische Verbindung wird bei einer ersten Ausgestaltung drahtgebunden in Form z. B. eines Flachbandkabels oder als Flexleiterkarte ausgeführt, kann aber ebenso auch drahtlos, also z. B. induktiv, kapazitiv, optisch oder per Funk realisiert sein.

Damit bei elektrischer Verbindung zwischen den beiden Gehäuseteilen sich diese trennen lassen, um im Bedarfsfalle separat voneinander ausgetauscht werden zu können, muss die Verbindung auftrennbar sein. Dies kann beispielsweise durch eine Steckerverbindung realisiert werden, was aber insoweit weniger komfortabel ist, als dass zum mechanischen Trennen der beiden Gehäuseteile auch noch die elektrische Drahtverbindung elektrisch getrennt werden muss. Ist die Verbindung hingegen drahtlos, bedarf es dieser Auftrennung nicht.

Vorteilhaft insoweit ist es, wenn die elektrische (Draht-)Verbindung mehrere Paare aus jeweils einem Kontaktstift und einem Kontaktfeld aufweist, wobei pro Paar an der Halsband-Anlageseite des einen Gehäuseteils ein Kontaktstift angeordnet ist, der im zusammengesetzten Zustand des Gehäuses mit dem ihm zugeordneten, an der Halsband-Anlageseite des anderen Gehäuseteils gegenüberliegend angeordneten Kontaktfeld in elektrischem Kontakt steht. Die Kontaktstifte sind zweckmäßigerweise federbelastet und drücken damit mit einer definierten Andrückkraft gegen die Kontaktfelder, wenn die Gehäuseteile zusammengesetzt sind. Es ist möglich, dass sämtliche Kontaktstifte für die elektrische Verbindung an der Anlageseite des einen Gehäuseteils und sämtliche Kontaktfelder an der Anlageseite des anderen Gehäuseteils positioniert sind. Es ist aber auch denkbar, dass beide Anlageseiten jeweils Kontaktstifte und Kontaktfelder aufweisen.

In weiterer zweckmäßiger Ausgestaltung der Erfindung kann vorgesehen sein, dass Kontaktstifte und die Kontaktfelder innerhalb der Anlageflächen der Halsband-Anlageseite angeordnet sind und dass das Halsband von den Kontaktstiften penetrierbar ist, wobei die Kontaktstifte zusätzlich als die Verrutschsicherungsvorsprünge oder als weitere Verrutschsicherungsvorsprünge dienen. Hierbei können also die Kontaktstifte neben ihrer Funktion zur Herstellung eines elektrischen Kontakts auch der Verrutschsicherung dienen, indem sie das Halsband durchdringen, womit dieses nach Art eines Formschlusses am Gehäuse verrutschsicher festgelegt ist.

Die von den Tieren getragenen Transponder-Halsbänder weisen im Regelfall ein Gewicht auf, das dafür sorgt, dass sich das Halsband beim Tragen nicht um den Hals des Tieres herum verdreht. Damit bleibt die Position des Transpondergehäuses im Tragezustand des Halsbandes im Wesentlichen immer gleich. Ein derartiges Gewicht, das der Verdrehsicherung des Halsbandes beim Tragen dient, kann gemäß einer vorteilhaften Weiterbildung der Erfindung gänzlich oder zumindest teilweise durch einen Akkumulator und/oder eine Batterie zur Energieversorgung und gegebenenfalls zur weiteren Energieversorgung der elektrischen Bauteile des Gehäuses gebildet sein. Am Halsband können somit mehrere Akkumulatoren und/oder Batterien für die Energieversorgung angeordnet werden und zwar als Gewicht bzw. in einem der oder in beiden Gehäuseteilen. Damit können die Intervalle, nach denen die elektronische Vorrichtung wegen zu geringer elektrischer Restenergie ausgetauscht werden müssen, verlängert werden.

In zweckmäßiger Ausgestaltung der zuvor beschriebenen Weiterbildung der Erfindung ist vorgesehen, dass die Energieversorgung (Akku, Batterie o.dgl.), die Teil des Gewichts ist, elektrisch mit dem Gehäuse verbunden ist, wobei die elektrische Verbindung an und/oder in dem Halsband ausgebildete elektrische Leiter aufweist, und dass das Gehäuse Kontaktelemente aufweist, die im zusammengesetzten Zustand des Gehäuses mit den elektrischen Leitern elektrisch verbunden sind. Hierbei kann die elektrische Verbindung in Form der elektrischen Leiter auf dem Halsband verlaufen oder aber auch in das Halsband integriert sein. Letzteres wird bevorzugt, da die elektrischen Leiter somit vor mechanischen Beschädigungen besser geschützt sind. Damit die elektrische Verbindung im Bereich der Kontaktelemente über die Kontaktierung der elektrischen Leiter zum Gehäuse erfolgt, sollten die elektrischen Leiter Anschlussfelder bzw. -bereiche aufweisen, die in elektrischem Kontakt mit den Kontaktelementen des Gehäuses stehen, wenn das Gehäuse zusammengesetzt ist. Die elektrischen Kontaktfelder der elektrischen Leiter sind an derjenigen Stelle des Halsbandes ausgeordnet, an der das Gehäuse positioniert werden muss. Diese Position relativ zum Gewicht des Halsbandes ist in gewissen Bereichen vorgegeben. Damit ist auch der Abstand zum Gewicht bzw. zum Akkumulator im Gewicht definiert. Die Kontaktfelder können außen an dem Halsband angeordnet sein, um mittels Kontaktstiften o.dgl. Elementen des Gehäuses, die insbesondere federnd ausgebildet sind, elektrisch kontaktiert zu werden. Eine andere Möglichkeit ist, dass in das Halsband eingewebte elektrisch leitende Fasern oder Leiter durch Schneid-Klemm-Anschlüsse des Gehäuses kontaktiert werden.

In weiterer zweckmäßiger Ausgestaltung der Erfindung kann schließlich vorgesehen sein, dass die Kontaktelemente des Gehäuses zum Eindringen in das Halsband vorgesehen sind und die Verrutschsicherungsvorsprünge oder zusätzliche Verrutschsicherungsvorsprünge bilden. In diesem Ausführungsbeispiel sind die elektrischen Leiter inklusive ihrer Kontaktfelder im Halsband integriert. Die Kontaktelemente des Gehäuses dringen nun im zusammengesetzten Zustand des Gehäuses in das Halsband ein, um die Kontaktfelder zu kontaktieren. Eine derartige elektrische Kontaktierung dient wiederum mit Vorteil auch der mechanischen Verrutschsicherung des Gehäuses am Halsband.

Für die elektrische Energieversorgungsverbindung der Akkumulatoren bzw. Batterien im Gewicht zum Gehäuse hin sind typischerweise zwei elektrische Leiter erforderlich (GND und VBAT). Um die polrichtige elektrische Verbindung des Gehäuses mit diesen beiden elektrischen Leitern des Halsbandes auch unter dem Gesichtspunkt zu ermöglich, dass es keine Rolle spielen darf, ob das Gehäuse von der linken oder von der rechten Seite an das Halsband bzw. in welcher Verdrehposition das Gehäuse angesetzt wird, ist es von Vorteil, wenn das Halsband mit drei elektrischen Leitern versehen ist, von denen beispielsweise der mittlere Leiter das GND-Potential führt und die beiden außenliegenden Leiter das VBAT-Potential führen (oder auch umgekehrt). Der mittlere Leiter verläuft zweckmäßigerweise längs der Mittelachse des Halsbandes während die beiden außenliegenden Leiter symmetrisch zur Mittelachse verlaufen. Die elektrischen Kontaktelemente des Gehäuses sind ebenfalls dergestalt verteilt angeordnet. Somit spielt es nun keine Rolle mehr, von welcher Seite des Halsbandes aus und in welcher Ausrichtung das Gehäuse angesetzt wird.

Die Erfindung wird nachfolgend anhand mehrerer Ausführungsbeispiele sowie unter Bezugnahme auf die Zeichnung näher erläutert. Im Einzelnen zeigen dabei:
- Fig. 1: eine perspektivische Darstellung eines Halsbandes mit Gewicht und einem Gehäuse einer elektronischen Vorrichtung,
- Fig. 2: ein erstes Ausführungsbeispiel des Gehäuses im aufgeklappten Zustand,
- Fig. 3: eine weitere Darstellung des Gehäuses bei Trennung der beiden Gehäuseteile,
- Fig. 4: eine Schnittansicht durch das Gehäuse gemäß Fig. 3 zur Verdeutlichung des Gelenkeingriffs der zuvor getrennten Gehäuseteile nach deren Zusammenführung in der Winkelstellung gemäß Fig. 3 und bei von dieser ausgehenden Verschwenkung und
- Fig. 5: eine schematische Darstellung der Leiterführung mit Kontaktfeldern und Kontaktelementen am Halsband bzw. am Gehäuse.

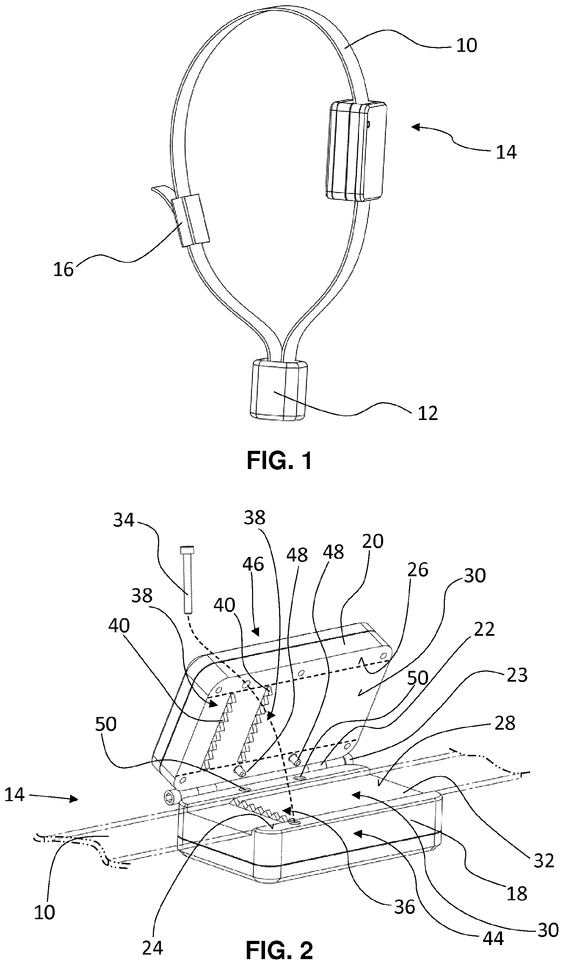

In Fig. 1 ist allgemein ein Halsband 10 gezeigt, das in diesem Ausführungsbeispiel als Flachband ausgeführt ist und an dem sich ein Gewicht 12 befindet. Verrutschsicher am Halsband 10 angeordnet ist das Gehäuse 14 einer elektronischen Vorrichtung, bei der es sich beispielsweise um einen Transponder und/oder um ein oder mehrere Sensoren zur Erfassung des physiologischen Zustands eines Tieres handelt. Ferner ist das Halsband 10 mit einer Längenverstell- und Fixiervorrichtung 16 versehen.

Das Gehäuse 14 gemäß einem ersten Ausführungsbeispiel ist in Fig. 2 gezeigt. Das Gehäuse 14 ist klappbar ausgeführt und weist ein unteres erstes Gehäuseteil 18 sowie ein oberes zweites Gehäuseteil 20 auf. Beide Gehäuseteile 18, 20 sind durch ein Scharnier 22 mit Scharnierstift 23 klappbar miteinander verbunden. Die Innenseiten der beiden Gehäuseteile 18, 20 sind als Anlageseiten 24, 26 ausgebildet und liegen im zusammengeklappten Zustand einander gegenüber. Zwischen den beiden Anlageseiten erstreckt sich das Halsband 10, wenn das Gehäuse 14 am Halsband 10 befestigt ist.

Jede Halsband-Anlageseite 24, 26 weist eine streifenförmig verlaufende Anlagefläche 28, 30 auf. Die Anlagefläche 28 am ersten Gehäuseteil 18 ist als Bodenfläche einer Vertiefung 32 ausgebildet, die das Halsband 10 aufnimmt, wenn sich dieses durch das Gehäuse 14 hindurch erstreckt. Im zusammengeklappten Zustand sind die beiden Gehäuseteile 18, 20 mittels eines Sicherungselements (in diesem Ausführungsbeispiel als Schraube 34 realisiert) miteinander fest verbunden, wobei ihre Anlageflächen 28, 30 beidseitig gegen das Halsband 10 drücken bzw. gespannt sind. Andere Möglichkeiten der Sicherung wie beispielsweise durch eine Schnappverbindung odgl. sind ebenfalls möglich. Zur Verrutschsicherung des Gehäuses 14 am Halsband 10 weisen die Halsband-Anlageseiten 24, 26 im Bereich ihrer Halsband-Anlageflächen 28, 30 Verrutschsicherungsvorsprünge 36, 38 auf. Diese Verrutschsicherungsvorsprünge 36, 38 sind in diesem Ausführungsbeispiel als querverlaufende Rippen 40, 42 ausgebildet, die vorzugsweise gezahnt sind.

Wie anhand von Fig. 2 zu erkennen ist, sind die rippenförmigen Verrutschsicherungsvorsprünge 36, 38 in Längserstreckung des Halsbandes 10 versetzt zueinander angeordnet. Dadurch kommt es zu einer Umlenkung des Halsbandes 10 zwischen den rippenförmigen Verrutschsicherungsvorsprüngen 36, 38, wenn das Gehäuse 14 zusammengeklappt ist und sich das Halsband 10 durch das Gehäuse 14 hindurch erstreckt. Diese doppelte Umlenkung und die Verzahnung odgl. Dorn-Struktur auf den rippenförmigen Verrutschsicherungsvorsprüngen 36, 38 sorgen für eine kraftschlüssige Verbindung zwischen dem Gehäuse 14 und dem Halsband 10, so dass das Gehäuse 14 längs des Halsbandes 10 nicht verrutschen kann. Im Bedarfsfalle können auch weitere oder auch anders gestaltete Verrutschsicherungsvorspünge innerhalb der Halsband-Anlageflächen 28, 30 der beiden Gehäuseteile 18, 20 vorgesehen sein.

In einem der beiden Gehäuseteile, beispielsweise im Gehäuseteil 18, befindet sich eine Energieversorgungseinheit 44 in Form von insbesondere wiederaufladbaren Akkumulatoren odgl. Batterien. Die Elektronik 46 in Form beispielsweise eines Transponders und/oder diverser Sensoren befindet sich beispielsweise im zweiten Gehäuseteil 20. Zur elektrischen Verbindung der Energieversorgungseinheit 44 mit der Elektronik 46 im Gehäuseteil 20 dienen zwei federbelastete Kontaktstifte 48, die mit zwei Kontaktfeldern 50 zusammenwirken. In diesem Ausführungsbeispiel sind beide elektrischen und insbesondere federbelastenden Kontaktstifte 48 am zweiten Gehäuseteil 20 angeordnet, während die beiden Kontaktfelder 50 am ersten Gehäuseteil 18 angeordnet sind. Sowohl die Kontaktstifte 48 als auch die Kontaktfelder 50 sind an den Halsband-Anlageseiten 24, 26 der beiden Gehäuseteile 18, 20 angeordnet. Im zusammengeklapptem Zustand kontaktieren dann die Kontaktstifte 48 die Kontaktfelder 50. Damit ist die elektrische Verbindung zwischen beiden Gehäuseteilen 18, 20 realisiert, wenn das Gehäuse 14 zusammengeklappt ist.

Der Vorteil der elektrischen Verbindung durch Paare aus jeweils einem federbelasteten Kontaktstift 48 und einem zugehörigen Kontaktfeld 50, verteilt angeordnet auf beide Gehäuseteile 18, 20, besteht darin, dass sich nun die beiden Gehäuseteile 18, 20 im Bedarfsfalle mechanisch voneinander trennen lassen, ohne dass dazu die elektrische Verbindung separat aufgetrennt werden muss. Die Trennung der beiden Gehäuseteile 18, 20 kann vorteilhaft sein, um ein defektes Gehäuseteil gegen ein entsprechendes neues Gehäuseteil auszutauschen. Im Ausführungsbeispiel gemäß Figur 2 kann die Trennung der beiden Gehäuseteile 18, 20 durch Entfernen des Scharnierstiftes 23 erfolgen, was allerdings mit einem gewissen Aufwand verbunden ist. Hier bietet sich als einfachere Lösung ein Schnellverschluss bzw. eine Konstruktion an, bei der sich der Scharnierstift 23 mittels eines Werkzeugs oder aber auch werkzeuglos einfach entfernen und wieder anbringen lässt.

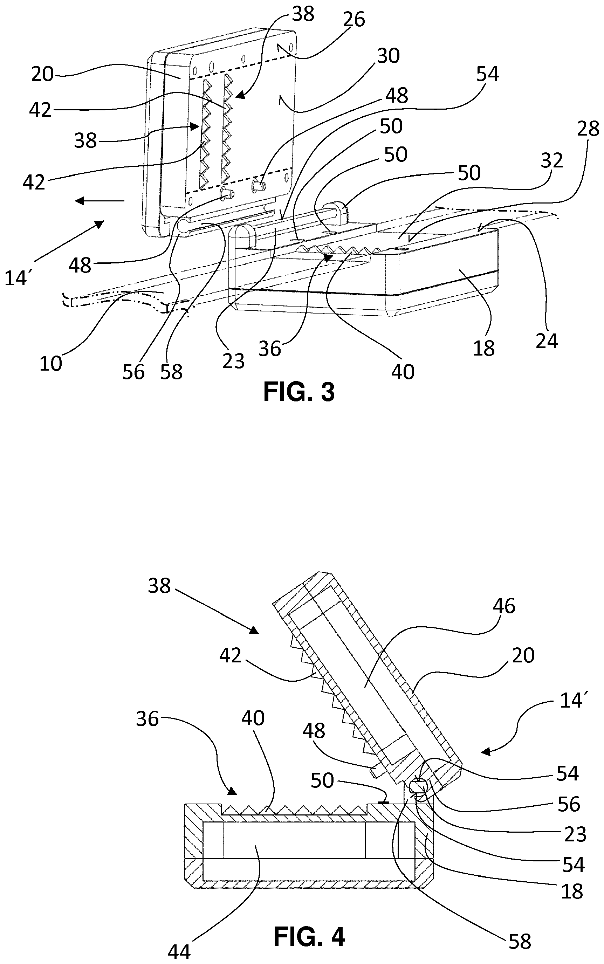

Eine bezüglich der Einfachheit der Trennung beider Gehäuseteile 18, 20 vorteilhafte Ausgestaltung eines Gehäuses 14' ist in den Fign. 3 und 4 gezeigt. Für diese Figuren gilt, dass diejenigen Elemente, die den Elementen und Teilen des Gehäuses 14 gemäß Fig. 2 konstruktiv bzw. funktional entsprechen, mit den gleichen Bezugszeichen versehen sind.

Der Unterschied der beiden Gehäuse-Ausgestaltungen gemäß Fig. 2 einerseits und den Fign. 3 und 4 andererseits ist darin zu sehen, dass durch eine besondere Ausbildung des Scharnierstiftes 23 die einfache Trennung beider Gehäuseteile 18, 20 im aufgeklappten Zustand möglich ist. Dies wird realisiert durch den Scharnierstift 23, der in diesem Ausführungsbeispiel am Gehäuseteil 18 angeordnet ist und zwischen zwei Lagerböcken 52 freiliegt, die am ersten Gehäuseteil 18 angeordnet sind. In diesem freiliegenden Abschnitt weist der Scharnierstift 23 zumindest eine vorzugsweise aber zwei einander abgewandte, diametral gegenüberliegende Abflachungen 54 auf.

Das zweite Gehäuseteil 20 ist nun mit einem im Querschnitt C-förmigem Profilelement 56 versehen, dessen Öffnung 58 bzgl. seiner Weite so bemessen ist, dass sich das Profilelement 56 dann, wenn das zweite Gehäuseteil 20 im Wesentlichen rechtwinklig zum ersten Gehäuseteil 18 erstreckt (oder allgemeiner ausgedrückt, nicht zusammengeklappt ist), auf den abgeflachten freiliegenden Abschnitt des Scharnierstiftes 23 von der Seite aufschieben lässt. Die Öffnung des C-förmigem Profilelements 56 ist also entsprechend dem Abstand der beiden Abflachungen 54 des Scharnierstifts 23 gewählt. Nachdem das zweite Gehäuseteil 20 auf den Scharnierstift 23 aufgesteckt ist, verriegelt es bei anschließender Verschwenkung relativ zum ersten Gehäuseteil 18 mit diesem, was in Fig. 4 gezeigt ist.

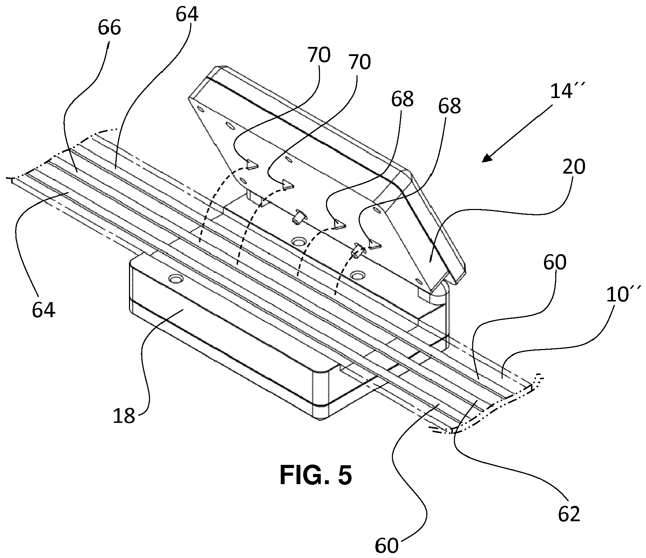

In Fig. 5 ist ein weiteres Ausführungsbeispiel eines Gehäuses 14" einer elektronischen Vorrichtung gezeigt. Auch hier gilt, dass diejenigen Teile und Elemente der Fig. 5, die funktions- bzw. konstruktionsgleich mit denen der Gehäuse 14 und 14' der Fign. 1 bis 4 sind, mit den gleichen Bezugszeichen versehen sind.

Bei dem Ausführungsbeispiel gemäß Fig. 5 ist das Gewicht 12 des Halsbandes 10 (siehe Fig. 1) zusätzlich mit einer elektrischen Funktion versehen. Es weist nämlich einen Akkumulator bzw. eine Batterie auf. Die elektrische Verbindung zwischen dem Gewicht 12, das nun auch der Energieversorgung dient, mit dem Gehäuse 14" erfolgt durch in das Halsband 10" eingelassene elektrische Leiter 60, 62, die in Kontaktfeldern 64, 66 enden, welche ihrerseits mit elektrischen Kontaktelementen 68, 70 am in diesem Ausführungsbeispiel zweiten Gehäuseteil 20 des Gehäuses 14" elektrisch zusammenwirken, wenn das Gehäuse 14" zugeklappt ist. Mindestens ein Kontaktelement 68 und ein Kontaktelement 70 sowie entsprechend mindestens ein Kontaktfeld 64 bzw. 66 ist ausreichend. Bevorzugt verwendet man mehrere dieser Kontaktelemente. Die Besonderheit hierbei besteht darin, dass durch die zueinander symmetrische Anordnung der elektrischen Kontaktfelder 64, 66 und der Kontaktelemente 68, 70 das Gehäuse 14" von beiden Seiten des Halsbandes 10" aus, an diesem festgelegt werden kann, wobei beim Zusammenklappen des Gehäuses 14" stets eine elektrische Verbindung der elektrischen Kontaktelemente 68 mit einem der Leiter 60 und der Kontaktelemente 70 mit dem mittleren Leiter 62 gewährleistet ist.

Die Erfindung wurde vorstehend anhand eines Ausführungsbeispiels eines auf- und zuklappbaren Gehäuses erläutert. Andere mechanische Verbindungen der Gehäuseteile zum Zwecke von deren Zusammensetzen unter Einschluss des Halsbandes zwischen sich sind selbstverständlich ebenfalls möglich (z. B. Dreh-Drück-Verschlüsse, Magnetverschlüsse, Verklipsungen, werkzeuglos erzielbares Verbinden und Lösen etc.).

### BEZUGSZEICHENLISTE

- 10: Halsband
- 10": Halsband
- 12: Gewicht
- 14: Gehäuse
- 14': Gehäuse
- 14": Gehäuse
- 16: Fixiervorrichtung
- 18: Gehäuseteil
- 20: Gehäuseteil
- 22: Scharnier
- 23: Scharnierstift
- 24: Halsband-Anlageseite
- 26: Halsband-Anlageseite
- 28: Halsband-Anlagefläche
- 30: Halsband-Anlagefläche
- 32: Vertiefung
- 34: Schraube
- 36: Verrutschsicherungsvorsprung
- 38: Verrutschsicherungsvorsprung
- 40: Rippe
- 42: Rippe
- 44: Energieversorgungseinheit, Akkumulator
- 46: Elektronik (elektronische Bauteile)
- 48: Kontaktstift
- 50: Kontaktfeld
- 52: Lagerbock
- 54: Abflachung an dem Scharnierstift
- 56: Profilelement am Gehäuseteil
- 58: Öffnung im Profilelement
- 60: elektrischer Leiter
- 62: elektrischer Leiter
- 64: Kontaktfeld
- 66: Kontaktfeld
- 68: Kontaktelement
- 70: Kontaktelement

## Patentansprüche

1. Elektronische Vorrichtung für die Erfassung und/oder Übertragung von Sensordaten eines Tieres und zur Anbringung an einem von dem Tier zu tragenden Halsband, mit
- einem Gehäuse (14, 14', 14"), das ein erstes Gehäuseteil (18) und ein zweites Gehäuseteil (20) aufweist, die miteinander verbindbar oder verbunden sind,
- wobei mindestens eines der Gehäuseteile (18, 20) elektronische Bauteile (46) und/oder eine Energieversorgungseinheit (44) für die elektronischen Bauteile (46) aufnimmt,
- wobei beide Gehäuseteile (18, 20) jeweils eine innenliegende Halsband-Anlageseite (24, 26) aufweisen, die im zusammengesetzten Zustand beider Gehäuseteile (18, 20) des Gehäuses (14, 14', 14") zur beidseitigen Anlage an einem Halsband einander zugewandt sind, und
- wobei mindestens eine Anlageseite (24,26) mindestens einen Verrutschsicherungsvorsprung (36, 38) zum mechanischen Eingriff mit dem Halsband aufweist.

2. Vorrichtung nach Anspruch 1, **dadurch gekennzeichnet, dass** jede Halsband-Anlageseite (24, 26) eine streifenförmige Anlagefläche (28, 30) aufweist, an der die Halsband-Anlageseite (24, 26) an dem Halsband anliegt.

3. Vorrichtung nach Anspruch 2, **dadurch gekennzeichnet, dass** die streifenförmige Anlagefläche (28, 30) mindestens einer der Halsband-Anlageseiten (24, 26) vertieft gegenüber der betreffenden Halsband-Anlageseite (24, 26) angeordnet ist.

4. Vorrichtung nach Anspruch 2 oder 3, **dadurch gekennzeichnet, dass** der mindestens eine Verrutschsicherungsvorsprung (36, 38) als quer zur Längserstreckung der streifenförmigen Anlagefläche (28, 30) verlaufende Rippe (40, 42) ausgebildet ist.

5. Vorrichtung nach Anspruch 4, **dadurch gekennzeichnet, dass** beide Anlageflächen (28, 30) in Längserstreckung der Anlageflächen (28, 30) versetzt angeordnete Rippen (40, 42) zur Umlenkung des Verlaufs des Halsbandes zwischen den beiden Halsband-Anlageseiten (24, 26) aufweist.

6. Vorrichtung nach einem der Ansprüche 1 bis 5, **dadurch gekennzeichnet, dass** der mindestens eine Verrutschsicherungsvorsprung (36, 38) eine gezahnte Oberflächenstruktur aufweist.

7. Vorrichtung nach einem der Ansprüche 1 bis 6, **dadurch gekennzeichnet, dass** der mindestens eine Verrutschsicherungsvorsprung (36, 38) als Dorn zum zumindest teilweisen Eindringen in das Halsband ausgebildet ist.

8. Vorrichtung nach einem der Ansprüche 1 bis 7, **dadurch gekennzeichnet, dass** die beiden Gehäuseteile (18, 20) voneinander trennbar sind.

9. Vorrichtung nach einem der Ansprüche 1 bis 8, **dadurch gekennzeichnet, dass** in dem einen Gehäuseteil (18, 20) die Energieversorgungseinheit (44) angeordnet ist und dass in dem anderen Gehäuseteil (18, 20) elektronische Bauteile (46) in Form mindestens eines Sensors zur Erfassung und/oder Übertragung von Daten über das Tier und/oder in Form eines Transponders angeordnet sind.

10. Vorrichtung nach Anspruch 9, **gekennzeichnet durch** eine induktiv und/oder kapazitiv und/oder optisch arbeitende drahtlose Verbindung und/oder durch eine drahtgebundene elektrische Verbindung zwischen den beiden Gehäuseteilen (18, 20).

11. Vorrichtung nach Anspruch 10, **dadurch gekennzeichnet, dass** die elektrische Verbindung als Flachbandkabel oder als Flexleiterkarte ausgebildet ist.

12. Vorrichtung nach Anspruch 10, **dadurch gekennzeichnet, dass** die elektrische Verbindung mehrere Paare aus jeweils einem Kontaktstift (48) und einem Kontaktfeld (50) aufweist, wobei pro Paar ein Kontaktstift (48) an der Halsband-Anlageseite (24, 26) des einen Gehäuseteils (18, 20) angeordnet ist, der im zusammengesetzten Zustand des Gehäuses (14, 14', 14") mit dem ihm zugeordneten, an der Halsband-Anlageseite (24, 26) des anderen Gehäuseteils (18, 20) gegenüberliegend angeordneten Kontaktfeld (50) in elektrischem Kontakt steht.

13. Vorrichtung nach Anspruch 12, **dadurch gekennzeichnet, dass** die Kontaktstifte (48) und die Kontaktfelder (50) innerhalb der Anlageflächen (28, 30) der Halsband-Anlageseite (24, 26) angeordnet sind und dass das Halsband von den Kontaktstiften (48) penetrierbar ist.

14. Vorrichtung nach Anspruch 13, **dadurch gekennzeichnet, dass** die Kontaktstifte (48) zusätzlich als die Verrutschsicherungsvorsprünge (36, 38) oder als weitere Verrutschsicherungsvorsprünge (36, 38) dienen.

15. Vorrichtung nach einem der Ansprüche 1 bis 14, **gekennzeichnet durch** ein Gewicht (12) zur Anbringung an dem Halsband zwecks Verdrehsicherung des Halsbandes beim Tragen durch das Tier, wobei das Gewicht (12) zumindest teilweise durch einen Akkumulator und/oder eine Batterie zur Energieversorgung und gegebenenfalls zur weiteren Energieversorgung der elektrischen Bauteile (46) des Gehäuses (14, 14', 14") gebildet ist.

16. Vorrichtung nach Anspruch 15, **dadurch gekennzeichnet, dass** das Gewicht (12) drahtlos und/oder drahtgebunden mit dem Gehäuse (14, 14', 14") verbunden ist.

17. Vorrichtung nach Anspruch 16, **dadurch gekennzeichnet, dass** die elektrische Verbindung an und/oder in dem Halsband ausgebildete elektrische Leiter (60, 62) aufweist, und dass das Gehäuse (14, 14', 14") Kontaktelemente (68, 70) aufweist, die im zusammengesetzten Zustand des Gehäuses (14, 14', 14") mit den elektrischen Leitern (60, 62) elektrisch verbunden sind.

18. Vorrichtung nach Anspruch 16 oder 17, **dadurch gekennzeichnet, dass** die Kontaktelemente (68, 70) des Gehäuses (14, 14', 14") zum Eindringen in das Halsband vorgesehen sind.

19. Vorrichtung nach Anspruch 18, **dadurch gekennzeichnet, dass** die Verrutschsicherungsvorsprünge (36, 38) oder zusätzliche Verrutschsicherungsvorsprünge (36, 38) bilden.
